# EUROPEAN PATENT APPLICATION

(11) **EP 2 442 298 A1**
(43) Date of publication of application: **18.04.2012**
(21) Application number: 10786090.0
(22) Date of filing: 01.06.2010
(51) Int. Cl.: G09G 5/00, G09G 5/36, G09G 5/391, G09G 5/393, H04N 5/70, H04N 13/04

(54) **IMAGE DISPLAY DEVICE, IMAGE DISPLAY OBSERVING SYSTEM, IMAGE DISPLAY METHOD, AND PROGRAM**

(30) Priority: 10.06.2009 JP 2009139011
(71) Applicant: Sony Corporation, Tokyo 108-0075 (JP)
(72) Inventor: MORI, Hideto, Tokyo 108-0075 (JP); INOUE, Yasuo, Tokyo 108-0075 (JP)
(74) Representative: Körber, Martin Hans
(86) International application number: PCT/JP2010/059249
(87) International publication number: WO 2010/143559

(57) **Abstract**

Provided is an image display device including a high frame rate signal generating unit that increases a frame rate of an input video signal, a frame rate adjusting unit that adjusts a frame rate by synthesizing a black image at intervals of a predetermined frame on a high frame rate signal output from the high frame rate signal generating unit, and a display panel that displays a video based on a video signal output from the frame rate adjusting unit.

## Description

### Technical Field

The present invention relates to an image display device, an image display observing system, an image display method, and a program.

### Background Art

In recent years, a technique of increasing a video signal of typically 60 Hz or the like to a high frame rate (120 Hz, 240 Hz, or the like) in order to increase moving picture responsiveness has been known. In a high frame rate video, compared to a video of typically 60 frames (60 Hz), more frames are displayed, and thus a user can enjoy a very smooth video.

In the past, for example, as described in the following Patent Literatures 1 to 3, a system of observing a stereoscopic video by alternately supplying a display with a left eye image and a right eye image, which have a parallax therebetween, at a predetermined cycle and observing the image with glasses with a synchronized liquid crystal shutter that is driven at a predetermined cycle has been known.

### Citation List

### Patent Literature

Patent Literature 1: JP 9-138384A
Patent Literature 2: JP 2000-36969A
Patent Literature 3: JP 2003 - 45343A

### Summary of Invention

### Technical Problem

However, in a device that performs high frame rate display, a user may desire display of a normal frame rate. In this case, if a normal frame rate is restored by a technique such as frame doubling of continuously displaying the same frame without changing a frame rate, the same video is continuously displayed, and thus there is a problem in that a video deteriorates. Particularly, for example, at the time of displaying a moving picture, if the same video is continuously displayed, a viewer estimates the position next to a moving object and moves a sight line, but the moving picture stops at the same position. Thus, there arises a problem in that the video is doubly recognized by the viewer.

Even in a system for observing a stereoscopic video, frames of a right eye image and a left eye image are continuously displayed in an alternate fashion, but the right eye image and the left eye image are continuously displayed. Thus, there arises a crosstalk problem in which the right eye image and the left eye image appear mixed to the user.

This problem is considered to prominently occur, particularly, in an organic electroluminescence (EL) display panel that is relatively fast in response speed of video display.

The present invention is made in light of the above problems, and it is an object of the present invention to provide an image display device, an image display observing system, an image display method, and a program, which are novel and improved and which are capable of reliably preventing deterioration of a video caused by continuous display of each frame of the video.

### Solution to Problem

In order to solve the above problems, according to an aspect of the present invention, there is provided an image display device including a high frame rate signal generating unit that increases a frame rate of an input video signal, a frame rate adjusting unit that adjusts a frame rate by synthesizing a black image at intervals of a predetermined frame on a high frame rate signal output from the high frame rate signal generating unit, and a display panel that displays a video based on a video signal output from the frame rate adjusting unit.

The frame rate adjusting unit may include a synchronization signal analyzing unit that analyzes a video synchronization signal of the high frame rate signal generated by the high frame rate signal generating unit and a black image synthesis unit that synthesizes the black image at intervals of a predetermined frame based on an analysis result of the video synchronization signal.

The frame rate adjusting unit may synthesize the black image when an off function of video display by a high frame rate is instructed.

The high frame rate signal generating unit may receive a right eye video signal and a left eye video signal for displaying a stereoscopic image and increase a frame rate of the right eye video signal and the left eye video signal, and the frame rate adjusting unit may synthesize the black image with a frame at timing when the right eye video signal and the left eye video signal are switched

In order to solve the above problems, according to another aspect of the present invention, there is provided an image display device including a high frame rate signal generating unit that increases a frame rate of a right eye video signal and a left eye video signal that are input, a signal adjusting unit that sets video display to non display, in a frame at timing when the right eye video signal and the left eye video signal are switched, on the right eye video signal and the left eye video signal of a high frame rate output from the high frame rate signal generating unit, and a display panel that alternately displays a right eye image and a left eye image based on a video signal output from the signal adjusting unit.

The signal adjusting unit may synthesize a black image with a frame at timing when the right eye video signal and the left eye video signal are switched.

The signal adjusting unit may set a frame at timing when the right eye video signal and the left eye video signal are switched to non-emission.

The signal adjusting unit may extend an emission time of a frame directly before the frame set to non-emission up to a field of the frame set to non-emission.

In order to solve the above problem, according to another aspect of the present invention, there is provided an image display observing system including an image display device including a high frame rate signal generating unit that increases a frame rate of a right eye video signal and a left eye video signal that are input, a signal adjusting unit that sets video display to non display, in a frame at timing when the right eye video signal and the left eye video signal are switched, on the right eye video signal and the left eye video signal of a high frame rate output from the high frame rate signal generating unit, a display panel that alternately displays a right eye image and a left eye image based on a video signal output from the signal adjusting unit, and a shutter control unit that generates a timing signal representing switching timing of the right eye image and the left eye image, and a stereoscopic video observing glasses that include right eye and left eye shutters and alternately open the right eye and left eye shutters based on the timing signal.

The signal adjusting unit may synthesize a black image with a frame at timing when the right eye video signal and the left eye video signal are switched.

The signal adjusting unit may set a frame at timing when the right eye video signal and the left eye video signal are switched to non-emission.

The signal adjusting unit may extend an emission time of a frame directly before the frame set to non-emission up to a field of the frame set to non-emission.

In order to solve the above problems, according to another aspect of the present invention, there is provided an image display method including increasing a frame rate of an input video signal, adjusting a frame rate by synthesizing a black image at intervals of a predetermined frame on a high frame rate signal output from the high frame rate signal generating unit, and displaying a video based on a video signal output from the frame rate adjusting unit.

In order to solve the above problems, according to another aspect of the present invention, there is provided an image display method including increasing a frame rate of a right eye video signal and a left eye video signal that are input, setting video display to non display, in a frame at timing when the right eye video signal and the left eye video signal are switched, on the right eye video signal and the left eye video signal of a high frame rate output from the high frame rate signal generating unit, and alternately displaying a right eye image and a left eye image based on a video signal output from the signal adjusting unit.

In order to solve the above problems, according to another aspect of the present invention, there is provided a program causing a computer to function as a means for increasing a frame rate of an input video signal, a means for adjusting a frame rate by synthesizing a black image at intervals of a predetermined frame on a high frame rate signal output from the high frame rate signal generating unit, and a means for displaying a video based on a video signal output from the frame rate adjusting unit.

In order to solve the above problems, according to another aspect of the present invention, there is provided a program causing a computer to function as a means for increasing a frame rate of a right eye video signal and a left eye video signal that are input, a means for setting video display to non display, in a frame at timing when the right eye video signal and the left eye video signal are switched, on the right eye video signal and the left eye video signal of a high frame rate output from the high frame rate signal generating unit, and a means for alternately displaying a right eye image and a left eye image based on a video signal output from the signal adjusting unit.

### Advantageous Effects of Invention

According to the present invention, it is possible to reliably prevent deterioration of a video caused by continuous display of each frame of the video.

### Brief Description of Drawings

[Fig. 1] Fig. 1 is a schematic diagram illustrating a schematic configuration of an image display device according to a first embodiment of the present invention.
[Fig. 2] Fig. 2 is a diagram schematically illustrating a video of each frame using a vertical axis as a time axis according to the first embodiment.
[Fig. 3] Fig. 3 is a schematic diagram illustrating a configuration of a frame rate adjusting unit according to the first embodiment.
[Fig. 4] Fig. 4 is a schematic diagram illustrating a configuration example of a stereoscopic image display observing system according to a second embodiment.
[Fig. 5] Fig. 5 is a block diagram illustrating a configuration of an image display device.
[Fig. 6] Fig. 6 is a schematic diagram illustrating a configuration of a left and right video signal control unit.
[Fig. 7] Fig. 7 is a schematic diagram schematically illustrating a video of each frame using a vertical axis as a time axis according to the second embodiment.
[Fig. 8] Fig. 8 is a schematic diagram illustrating a configuration of a frame rate adjusting unit (a signal adjusting unit) according to the second embodiment.
[Fig. 9] Fig. 9 is a schematic diagram illustrating a configuration of a frame rate adjusting unit (a signal adjusting unit) according to a third embodiment.
[Fig. 10] Fig. 10 is a timing chart representing various signals and data related to an operation of an image display device according to the third embodiment.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Further, a description will be made in the following order.
1. First Embodiment
   (1) Background Technology
   (2) Configuration Example of Image Display Device
   (3) Configuration Example of Frame Rate Adjusting Unit
2. Second Embodiment
   (1) Configuration Example of Stereoscopic Image Display Observing System
   (2) Configuration Example of Image Display Device
   (3) Configuration Example of Frame Rate Adjusting Unit
3. Third Embodiment
   (1) Configuration Example of Frame Rate Adjusting Unit

### <1. First Embodiment>

### (1) Background Technology

In order to increase moving picture responsiveness, a high frame rate technique for increasing a video signal of 60 Hz to 120 Hz or 240 Hz has been rapidly spreading. For this reason, an image display device such as a television receiver includes an integrated circuit (IC) (a high frame rate IC) that performs frame doubling on a video signal of 60 Hz and generates a video signal of a high frame rate.

In a high frame rate video, compared to a video of typically 60 frames (60 Hz), more frames are displayed, and thus a user can enjoy a very smooth video. Meanwhile, a video of a high frame rate is generated originally from a video signal of 60 Hz, and a video that has not originally been present is created between videos of 60 frames. For this reason, the quality of the video may deteriorate. Further, in a video of a high frame rate, when a video such as a movie is enjoyed, the video may lose its original taste since the video becomes too smooth. For this reason, for example, a television receiver having a video display function of a high frame rate generally has a mode for turning off the function.

In the case of turning off the video display function of the high frame rate, the off function is implemented such that a typical high frame rate IC does not lower a frame rate to 60 Hz but performs frame doubling to output the same video twice or more in a state in which a high frame rate is maintained. In this case, the same video is continuously displayed twice.

In a hold-type display that is slow in response speed like an LCD, frame doubling is effective. However, in a self-emission type organic EL display, since a response speed is very fast, when a frame-doubled video is displayed, there arises an adverse effect that the video is doubly viewed.

### (2) Configuration Example of Image Display Device

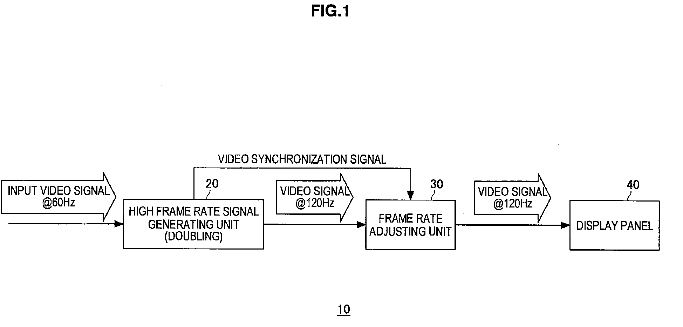

In this regard, in the present embodiment, provided is a technique of restoring a doubled video signal to a normal frame rate and displaying a video of a normal frame rate. First, a schematic configuration of an image display device 10 according to a first embodiment of the present invention will be described with reference to Fig. 1. As illustrated in Fig. 1, the image display device 10 includes a high frame rate signal generating unit 20, a frame rate adjusting unit 30, and a display panel 40.

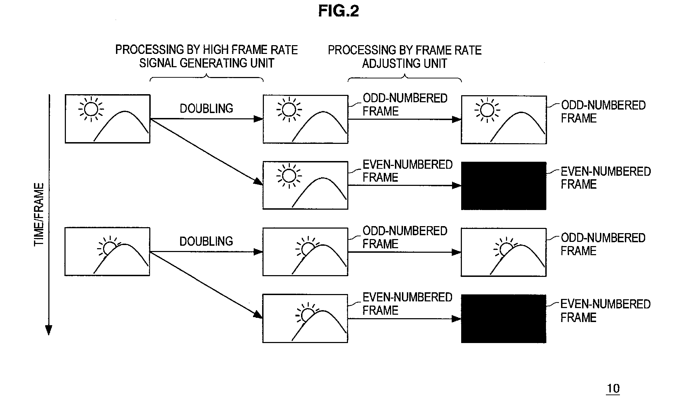

Fig. 2 schematically illustrates a video of each frame using a vertical axis as a time axis. In Fig. 2, a video by an input signal (60 Hz) to the high frame rate signal generating unit 20, a video by an output signal (120 Hz) from the high frame rate signal generating unit 20, and a video by an output signal (120 Hz) from the frame rate adjusting unit 30 are schematically illustrated in order from the left side.

A video signal of 60 Hz such as a television signal is input to the high frame rate signal generating unit 20. The high frame rate signal generating unit 20 performs doubling on the video signal of 60 Hz and generates a high frame rate video signal of 120 Hz. As illustrated in Fig. 2, the high frame rate signal generating unit 20 generates (doubles) a signal corresponding to two videos from a signal corresponding to one video. As a result, a high frame rate video signal in which the number of frames per unit time is doubled is generated. The frequency of a high frame rate is not limited thereto.

The frame rate adjusting unit 30 performs a process of adjusting the frame rate of a high frame rate video signal of 120 Hz generated by the high frame rate signal generating unit 20 when the video display function of the high frame rate is turned off. As illustrated in Fig. 2, in the present embodiment, the frame rate adjusting unit 30 adjusts the high frame rate video signal of 120 Hz so that a black video can be displayed at intervals of one frame.

The display panel 40 is configured with a display panel such as an organic EL (OLED) display panel and includes pixels that are arranged in a matrix form to perform emission display. The display panel 40 receives a signal output from the frame rate adjusting unit 30 and causes the pixels to emit light based on the input signal.

### (3) Configuration Example of Frame Rate Adjusting Unit

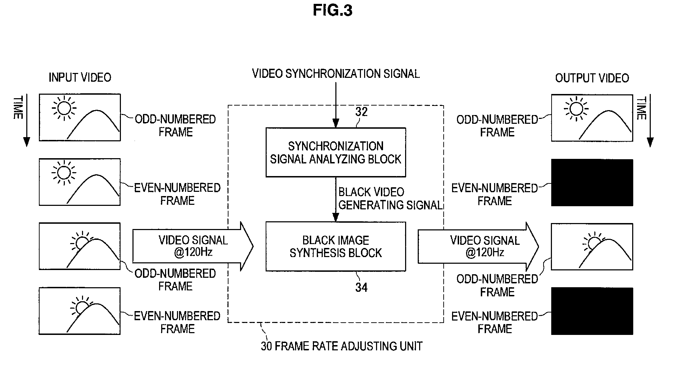

Fig. 3 is a schematic diagram illustrating a configuration of the frame rate adjusting unit 30. The frame rate adjusting unit 30 includes a synchronization signal analyzing block 32 and a black image synthesis block 34.

The components illustrated in Figs. 1 to 3 may be configured with hardware (circuit) such as a high frame rate IC or a central processor such as a central processing unit (CPU) and a program (software) operating the hardware and the central processor. When the components illustrated in Fig. 1 are configured with the central processor and the program operating the central processor, the program may be stored in a memory or the like included in the image display device. Further, processing of an image display method according to the present embodiment is implemented by a processing procedure sequentially performed by the components illustrated in Figs. 1 to 3.

A video signal of a high frame rate from the high frame rate signal generating unit 20 is input to the black image synthesis block 34. A video synchronization signal (a signal for acquiring synchronization of frames) from the high frame rate signal generating unit 20 is input to the synchronization signal analyzing block 32. The video synchronization signal is a synchronization signal corresponding to each frame of a high frame rate output from the high frame rate signal generating unit 20. One pulse of the video synchronization signal is regarded as a pulse representing the start of a predetermined one frame. The frequency of the video synchronization signal is 120 Hz which is twice the normal frequency (a normal frame rate of 60 Hz). Thus, the pulse representing the start of the same frame is continuously output twice during 60 Hz that is the normal frame rate.

The synchronization signal analyzing block 32 analyzes timing of synthesizing a black image based on the video synchronization signal input from the high frame rate signal generating unit 20 and inputs a black video generating signal to the black image synthesis block 34 as an analysis result. For example, the synchronization signal analyzing block 32 inputs a timing signal corresponding to an even-numbered frame to the black image synthesis block 34 as a black video generating signal based on the video synchronization signal so as to synthesize the black image at timing of an even-numbered frame among frames of the video signal of the high frame rate. The black image synthesis block 34 synthesizes the video of the even-numbered frame with the black image on the video signal of the high frame rate based on the input black video generating signal. As a result, a video signal output from the black image synthesis block 34 becomes a signal of displaying the black image at intervals of one frame as illustrated in Figs. 2 and 3. The signal output from the black image synthesis block 34 is input to the display panel 40.

The display panel 40 causes the pixels to emit light based on the video signal output from the black image synthesis block 34. As a result, the display panel 40 displays the black image at intervals of one frame. Thus, when the high frame rate display function is turned off, the frame rate remains unchanged, that is, 120 Hz, but due to insertion of the black image, a video of substantially 60 Hz can be displayed. Thus, compared to the case in which the video display function of the high frame rate is turned off by frame doubling, by synthesizing the black image, the video can be reliably prevented from being doubly viewed.

As described above, in the present embodiment, the signal for displaying the black image at intervals of one frame is generated by the black image synthesis block 34 of the frame rate adjusting unit 30. Thus, compared to the off function of high frame rate video display by frame doubling, particularly even in an organic EL display having a fast response speed, a phenomenon in which the video is doubly viewed does not occur. Accordingly, when the high frame rate video display function is turned off, an excellent video can be displayed.

As described above, according to the first embodiment, when the high frame rate video display function is turned off, since the black image is inserted between frames, the off function of the high frame rate can be implemented without deteriorating the video.

### <2. Second Embodiment>

### Configuration Example of Stereoscopic Image Display Observing System

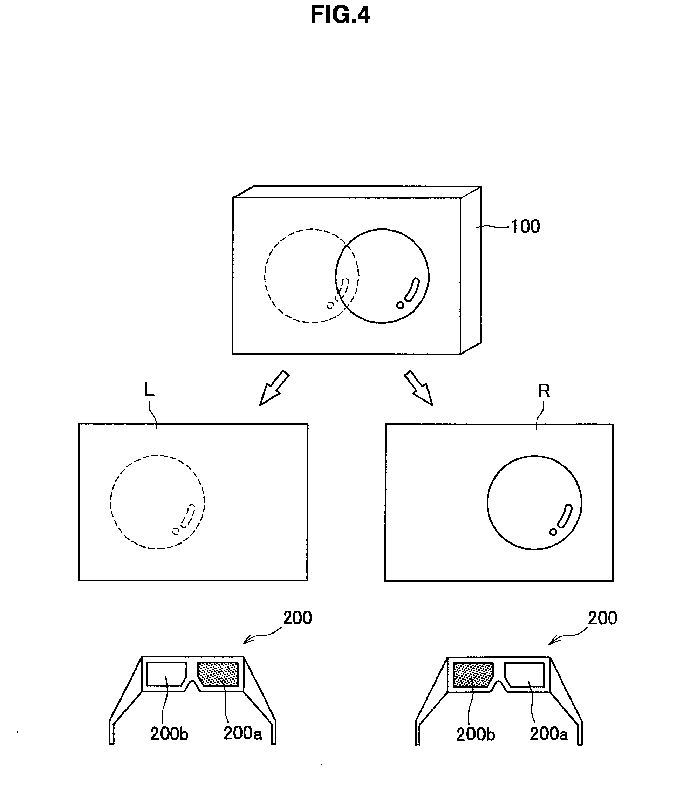

Next, a description will be made in connection with a second embodiment of the present invention. The second embodiment is one in which the configuration of the image display device 10 according to the first embodiment is applied to a stereoscopic image display observing system that performs three dimensional (3D) display. First, a configuration example of a stereoscopic image display observing system according to the second embodiment will be described with reference to Fig. 4.

Fig. 4 is a schematic diagram illustrating a configuration of a stereoscopic image display observing system according to the second embodiment. As illustrated in Fig. 3, the system according to the present embodiment includes an image display device 100 and display image observing glasses 200.

For example, the image display device 100 alternately displays a right eye image R and a left eye image L for each field. The display image observing glasses 200 include a pair of liquid crystal (LC) shutters 200a and 200b which are disposed at portions corresponding to lenses. The LC shutters 200a and 200b alternately perform an opening/closing operation in synchronization with image switching performed for each field by the image display device 100. That is, in a field in which the right eye image R is displayed on the image display device 100, the left eye LC shutter 200b becomes closed, and the right eye LC shutter becomes open 200a. In a field in which the left eye image L is displayed, a reverse operation is performed.

Through this operation, only the right eye image R is incident to the right eye of the user who views the image display device 100 with the observing glasses 200, and only the left eye image L is incident to the left eye. Thus, the right eye image and the left eye image are synthesized inside the observer's eyes, and the image displayed on the image display device 100 is stereoscopically recognized. Further, the image display device 100 may display a two-dimensional image. In this case, switching of the right eye image R and the left eye image L is not performed.

### (2) Configuration Example of Image Display Device

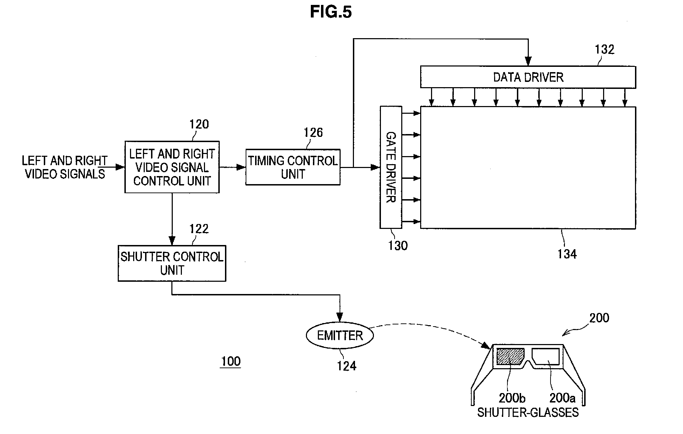

Next, a description will be made in connection with a configuration of the image display device 100. Fig. 5 is a block diagram illustrating a configuration of the image display device 100. As illustrated in Fig. 5, the image display device 100 includes a left and right video control unit 120, a shutter control unit 122, an emitter 124, a timing control unit 126, a gate driver 130, a data driver 132, and a display panel 134. The left and right video signal control unit 120 corresponds to the high frame rate signal generating unit 20 and the frame rate adjusting unit 30 of the first embodiment. The display panel 134 corresponds to the display panel 40 of the first embodiment.

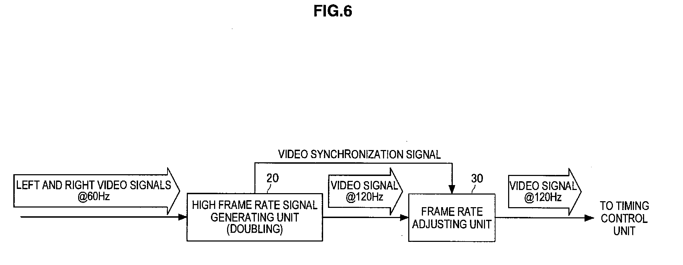

Fig. 6 is a schematic diagram illustrating a configuration of the left and right video signal control unit 120. The left and right video signal control unit 120 includes a high frame rate signal generating unit 20 and a frame rate adjusting unit 30. Left and right video signals for displaying the right eye image R and the left eye image L are input to the high frame rate signal generating unit 20. The high frame rate signal generating unit 20 performs conversion of the right eye image R and the left eye image L, based on the input left and right video signals, so that the two same signals can be consecutive.

The components illustrated in Figs. 4 to 6 may be configured with hardware (circuit) or a central processor such as a CPU and a program (software) operating the hardware and the central processor. When the components illustrated in Figs. 4 to 6 are configured with the central processor and the program operating the central processor, the program may be stored in a memory or the like included in the image display device. Further, processing of an image display method according to the present embodiment is implemented by a processing procedure sequentially performed by the components illustrated in Figs. 4 to 6. This is the same as in a third embodiment which will be described later.

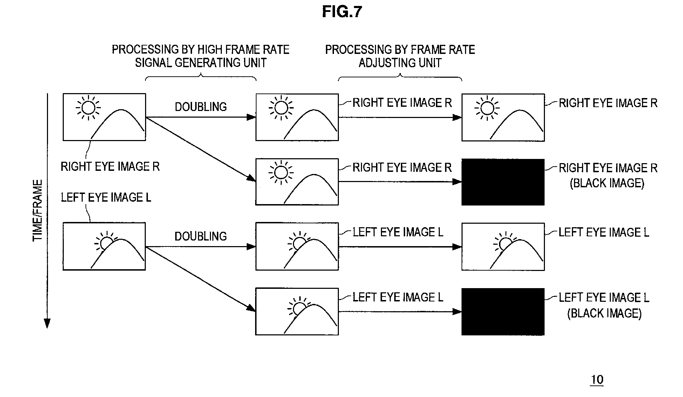

Fig. 7 schematically illustrates a video of each frame using a vertical axis as a time axis. In Fig. 7, a right eye image R and a left eye image L by an input signal (60 Hz) to the high frame rate signal generating unit 20, a right eye image R and a left eye image L by an output signal (120 Hz) from the high frame rate signal generating unit 20, and a right eye image R and a left eye image L by an output signal (120 Hz) from the frame rate adjusting unit 30 are schematically illustrated in order from the left side.

The frame rate adjusting unit 30 performs a process of adjusting the frame rate of each of the right eye video signal and the left eye video signal output from the high frame rate signal generating unit 20 and also adjusts the signals so that one of the two consecutive videos can become a dark image as illustrated in Fig. 7.

### (3) Configuration Example of Frame Rate Adjusting Unit

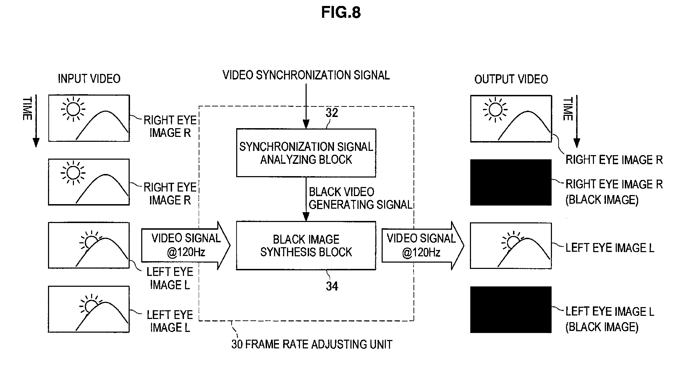

Fig. 8 is a schematic diagram illustrating a configuration of the frame rate adjusting unit (a signal adjusting unit) 30. Similarly to the first embodiment, the frame rate adjusting unit 30 includes a synchronization signal analyzing block 32 and a black image synthesis block 34. The consecutive left eye and right eye video signals from the high frame rate signal generating unit 20 are input to the black image synthesis block 34. A video synchronization signal from the high frame rate signal generating unit 20 is input to the synchronization signal analyzing block 32. The video synchronization signal is a synchronization signal corresponding to each frame of the right eye video signal and the left eye video signal output from the high frame rate signal generating unit 20.

The synchronization signal analyzing block 32 analyzes timing of synthesizing the black image based on the video synchronization signal input from the high frame rate signal generating unit 20 and inputs a black video generating signal to the black image synthesis block 34 as an analysis result. For example, the synchronization signal analyzing block 32 inputs a timing signal corresponding to a second frame to the black image synthesis block 34 as the black video generating signal based on the video synchronization signal so as to synthesize the black image at timing of the second frame of each of the two consecutive right eye video signals and the two consecutive left eye video signals. The black image synthesis block 34 inserts the black image into the second frame of the right eye video signal and the second frame of the left eye video signal based on the input black video generating signal. As a result, a video signal output from the black image synthesis block 34 becomes a signal for displaying the black image at intervals of one frame as illustrated in Fig. 7. The signal output from the black image synthesis block 34 is input to the timing control unit 126.

As described above, the right eye video signal and the left eye video signal synthesized with the black image through the left and right video signal control unit 120 are input to the timing control unit 126. The timing control unit 126 converts the input right eye video signal and left eye video signal to signals to be input to the display panel 132 and generates pulse signals used for operations of the gate driver 130 and the data driver 132.

The signals converted by the timing control unit 126 are input to the gate driver 130 and the data driver 132, respectively. The gate driver 130 and the data driver 132 receive the pulse signals generated by the timing control unit 126 and cause pixels of the display panel 134 to emit light based on the input signal. Accordingly, the video is displayed on the display panel 134.

The left and right video signal control unit 120 transmits a timing signal, representing switching timing of the right eye video signal and the left eye video signal which have been converted so that two signals can be consecutive, to the shutter control unit 122. The shutter control unit 122 transmits a driving signal causing the emitter 124 to emit light to the emitter 124 based on the timing signal transmitted from the left and right video signal control unit 120. The emitter 124 transmits an optical signal representing switching timing of the left and right video signals to the observing glasses 200.

Although not described in detail, the display image observing glasses 200 include a sensor that receives the optical signal. The observing glasses 200 that have received the optical signal alternately perform an opening/closing operation of the LC shutters 200a and 200b in synchronization with the switching timing of the right eye video signal and the left eye video signal of the image display device 100.

As described above, in the present embodiment, of the two consecutive right eye images R, the second image is synthesized with the black image. Further, in the two consecutive left eye images L as well, the second image is synthesized with the black image. As a result, when the right eye image R and the left eye image L are switched, the black image is necessarily displayed. Thus, by displaying the black image between the right eye image R and the left eye image L, it is possible to reliably prevent a crosstalk problem that the right eye image R and the left eye image L appear mixed to the user.

### <3. Third Embodiment>

Next, a description will be made in connection with a third embodiment of the present invention. The third embodiment relates to a stereoscopic image display observing system that performs 3D display similarly to the second embodiment, and a configuration of an image display device 100 is similar to the second embodiment illustrated in Fig. 5. In the image display device 100 according to the second embodiment, a basic configuration of a left and right video signal control unit 120 is similar to one illustrated in Fig. 6, but the third embodiment is different from the second embodiment in a configuration of a frame rate adjusting unit 30.

### (1) Configuration Example of Frame Rate Adjusting Unit

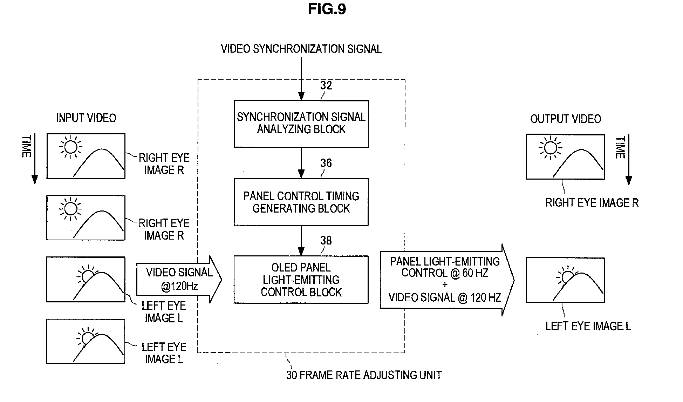

Fig. 9 is a schematic diagram illustrating a configuration of the frame rate adjusting unit (a signal adjusting unit) 30. As illustrated in Fig. 9, the frame rate adjusting unit 30 includes a synchronization signal analyzing block 32, a panel control timing generating block 36, and an OLED panel emission control block 38.

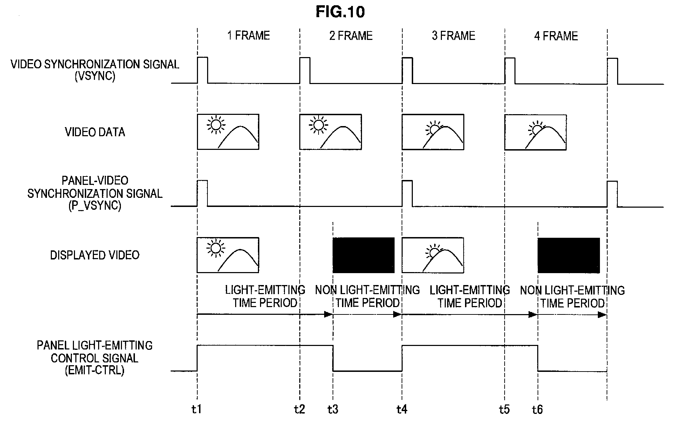

Fig. 10 is a timing chart illustrating various signals and data related to an operation of the image display device 100. A "video synchronization signal Vsync" illustrated in Fig. 10 is generated according to display timing of each frame when the two consecutive right eye video signals and the two consecutive left eye video signals are generated by the high frame rate signal generating unit 20. "Video data" illustrated in Fig. 10 is data of a video corresponding to the two consecutive right eye video signals and the two consecutive left eye video signals output from the high frame rate signal generating unit 20. A "panel-video synchronization signal P_Vsync" illustrated in Fig. 10 is a video synchronization signal in which the video synchronization signal Vsync of an even-numbered frame is deleted by the panel control timing generating block 36 which will be described later. A "video to display" illustrated in Fig. 10 is a video to be actually displayed on the display panel 40. A "panel emission control signal Emit-Ctrl" illustrated in Fig. 10 represents a signal for controlling an emission time of a frame to be displayed on the display panel 40.

Referring to Fig. 9, the two consecutive right eye video signals and the two consecutive left eye video signals from the high frame rate signal generating unit 20 are input to the OLED panel emission control block 38. The video synchronization signal from the high frame rate signal generating unit 20 is input to the synchronization signal analyzing block 32.

The synchronization signal analyzing block 32 analyzes whether or not a current frame is a frame to which a non-emission time period is set based on the video synchronization signal input from the high frame rate signal generating unit 20. In the present embodiment, as illustrated in Fig. 10, the non-emission time period is set to the even-numbered frame. For this reason, the synchronization signal analyzing block 32 analyzes whether the current frame is the even-numbered frame or the odd-numbered frame based on the video synchronization signal and outputs an analysis result to the panel control timing generating block 36.

The panel control timing generating block 36 performs a process of deleting the video synchronization signal Vsync on a frame having a set non-emission time period based on the analysis result of the synchronization signal analyzing block 32. Here, since the non-emission time period is set to the even-numbered frame, as illustrated in Fig. 10, when the current frame is the even-numbered frame, the video synchronization signal Vsync of the even-numbered frame is erased. As a result, the panel-video synchronization signal P_Vsync illustrated in Fig. 4 can be obtained. Since the panel-video synchronization signal P_Vsync is a signal representing timing for displaying the video on the display panel 40, by deleting the synchronization signal of the even-numbered frame, the video of the even-numbered frame is not displayed. Thus, the even-numbered frame becomes the non-emission time period.

The OLED panel emission control block 38 decides an emission time period of the odd-numbered frame. The emission time period of the odd-numbered frame is a section in which the panel emission control signal Emit-Ctrl illustrated in Fig. 10 is high, and the OLED panel emission control block 38 decides a duty ratio of the panel emission control signal Emit-Ctrl.

The OLED panel emission control block 38 sets a duty ratio of the panel emission control signal Emit-Ctrl so that the emission time period of the odd-numbered frame can overlap the field of the emission time period of the original even-numbered frame. In further detail, in a state in which the video synchronization signal is not deleted, emission of the even-numbered frame starts at timing (t2 and t5 illustrated in Fig. 10) at which the video synchronization signal transitions to high, but the termination of the emission time period of the odd-numbered frame is set to timing after the times t2 and t5 have elapsed. As described above, the emission time period of the odd-numbered frame extends up to the field of the emission time period of the even-numbered frame in which the video synchronization signal is not deleted.

As a result, the OLED panel emission control block 38 outputs the video signal (240 Hz) in the state in which the video synchronization signal of the even-numbered frame is deleted (according to the panel-video synchronization signal P_Vsync illustrated in Fig. 4) and outputs the panel emission control signal Emit-Ctrl. As described above, since the video signal is 240 Hz but the video synchronization signal Vsync of the even-numbered frame has been deleted, the video by the video signal of the even-numbered frame is not displayed on the display panel 40. Since the panel emission control signal Emit-Ctrl controls the emission time period of the video of the odd-numbered frame as illustrated in Fig. 10, a cycle thereof is 120 Hz.

As described above, in the present embodiment, since the video synchronization signal of the even-numbered frame is deleted, the second image of the two consecutive right eye images R is set to non-emission. Further, the second image of the two consecutive left eye images L is also set to non-emission. As a result, when the right eye image and the left eye image are switched, the non-emission section is necessarily set. Thus, since the non-emission section is set between the right eye image R and the left eye image L, it is possible to reliably prevent a crosstalk problem in which the right eye image R and the left eye image L appear mixed to the user.

Furthermore, in the present embodiment, as illustrated in Fig. 3, the emission time of the odd-numbered frame extends up to the field of the original even-numbered frame. Thus, even when the even-numbered frame is not displayed, a decrease in brightness can be reliably compensated.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

The present invention can be widely applied to, for example, an image display device such as a television receiver, an image display observing system, an image display method, and a program.

### Reference Signs List

- 10, 100: image display device
- 20: high frame rate signal generating unit
- 30: frame rate adjusting unit
- 32: synchronization signal analyzing block
- 34: black image synthesis block
- 36: panel control timing generating block
- 38: OLED panel emission control block
- 40, 134: display panel
- 200: display image observing glasses

## Claims

1. An image display device, comprising:
a high frame rate signal generating unit that increases a frame rate of an input video signal;
a frame rate adjusting unit that adjusts a frame rate by synthesizing a black image at intervals of a predetermined frame on a high frame rate signal output from the high frame rate signal generating unit; and
a display panel that displays a video based on a video signal output from the frame rate adjusting unit.

2. The image display device according to claim 1, wherein the frame rate adjusting unit includes:
a synchronization signal analyzing unit that analyzes a video synchronization signal of the high frame rate signal generated by the high frame rate signal generating unit; and
a black image synthesis unit that synthesizes the black image at intervals of a predetermined frame based on an analysis result of the video synchronization signal.

3. The image display device according to claim 1, wherein the frame rate adjusting unit synthesizes the black image when an off function of video display by a high frame rate is instructed.

4. The image display device according to claim 1, wherein the high frame rate signal generating unit receives a right eye video signal and a left eye video signal for displaying a stereoscopic image and increases a frame rate of the right eye video signal and the left eye video signal, and
the frame rate adjusting unit synthesizes the black image with a frame at timing when the right eye video signal and the left eye video signal are switched.

5. An image display device, comprising:
a high frame rate signal generating unit that increases a frame rate of a right eye video signal and a left eye video signal that are input;
a signal adjusting unit that sets video display to non display, in a frame at timing when the right eye video signal and the left eye video signal are switched, on the right eye video signal and the left eye video signal of a high frame rate output from the high frame rate signal generating unit; and
a display panel that alternately displays a right eye image and a left eye image based on a video signal output from the signal adjusting unit.

6. The image display device according to claim 5, wherein the signal adjusting unit synthesizes a black image with a frame at timing when the right eye video signal and the left eye video signal are switched.

7. The image display device according to claim 5, wherein the signal adjusting unit sets a frame at timing when the right eye video signal and the left eye video signal are switched to non-emission.

8. The image display device according to claim 5, wherein the signal adjusting unit extends an emission time of a frame directly before the frame set to non-emission up to a field of the frame set to non-emission.

9. An image display observing system, comprising:
an image display device including a high frame rate signal generating unit that increases a frame rate of a right eye video signal and a left eye video signal that are input, a signal adjusting unit that sets video display to non display, in a frame at timing when the right eye video signal and the left eye video signal are switched, on the right eye video signal and the left eye video signal of a high frame rate output from the high frame rate signal generating unit, a display panel that alternately displays a right eye image and a left eye image based on a video signal output from the signal adjusting unit, and a shutter control unit that generates a timing signal representing switching timing of the right eye image and the left eye image; and
stereoscopic video observing glasses that include right eye and left eye shutters and alternately open the right eye and left eye shutters based on the timing signal.

10. The image display observing system according to claim 9, wherein the signal adjusting unit synthesizes a black image with a frame at timing when the right eye video signal and the left eye video signal are switched.

11. The image display observing system according to claim 9, wherein the signal adjusting unit sets a frame at timing when the right eye video signal and the left eye video signal are switched to non-emission.

12. The image display observing system according to claim 9, wherein the signal adjusting unit extends an emission time of a frame directly before the frame set to non-emission up to a field of the frame set to non-emission.

13. An image display method, comprising:
increasing a frame rate of an input video signal;
adjusting a frame rate by synthesizing a black image at intervals of a predetermined frame on a high frame rate signal output from the high frame rate signal generating unit; and
displaying a video based on a video signal output from the frame rate adjusting unit.

14. An image display method, comprising:
increasing a frame rate of a right eye video signal and a left eye video signal that are input;
setting video display to non display, in a frame at timing when the right eye video signal and the left eye video signal are switched, on the right eye video signal and the left eye video signal of a high frame rate output from the high frame rate signal generating unit; and
alternately displaying a right eye image and a left eye image based on a video signal output from the signal adjusting unit.

15. A program causing a computer to function as:
a means for increasing a frame rate of an input video signal;
a means for adjusting a frame rate by synthesizing a black image at intervals of a predetermined frame on a high frame rate signal output from the high frame rate signal generating unit; and
a means for displaying a video based on a video signal output from the frame rate adjusting unit.

16. A program causing a computer to function as:
a means for increasing a frame rate of a right eye video signal and a left eye video signal that are input;
a means for setting video display to non display, in a frame at timing when the right eye video signal and the left eye video signal are switched, on the right eye video signal and the left eye video signal of a high frame rate output from the high frame rate signal generating unit; and
a means for alternately displaying a right eye image and a left eye image based on a video signal output from the signal adjusting unit.
